# DEMANDE DE BREVET EUROPEEN

(11) **EP 4 759 865 A1**
(43) Date de publication de la demande: **17.06.2026**
(21) Numéro de dépôt: 25307058.5
(22) Date de dépôt: 09.12.2025
(51) Int. Cl.: C08H 99/00, C09D 5/18, B01D 11/02, B27K 7/00

(54) **PROCÉDÉ D'EXTRACTION D'UNE FRACTION PHÉNOLIQUE À PARTIR DE LIÈGE, ET UTILISATION DE CETTE FRACTION DANS DES COMPOSITIONS INTUMESCENTES**

(30) Priorité: 10.12.2024 FR 2413739
(71) Demandeur: Centre National de la Recherche Scientifique, 75016 Paris (FR); Université de Corse Pasquale Paoli, 20250 Corte (FR)
(72) Inventeur: BARBONI, Toussaint, 20243 PRUNELLI-DI-FIUMORBO (FR); LORENZETTI, Jean-Valère, 20250 CORTE (FR); SANTONI, Paul Antoine, 20167 AFA (FR)
(74) Mandataire: IXAS Conseil

(57) **Abrégé**

Procédé d'extraction d'une fraction de composés phénoliques à partir du liège, comprenant une étape de mise en contact d'une phase solide qui est formée par un granulat et/ou d'une poudre de liège, avec une phase liquide sous pression dans une enceinte, ladite phase liquide comportant au moins 80 % massiques d'eau et au plus 20 % massiques d'éthanol,
ledit procédé étant caractérisé en ce que la température de l'eau est comprise entre environ 70 °C et environ 100 °C, et en ce que la pression est d'au moins 30 bars.

## Description

### Domaine technique

L'invention concerne le domaine du traitement physique ou chimique du liège, et plus particulièrement le domaine de l'extraction de molécules organiques contenues dans le liège à l'aide d'un solvant. L'extraction vise un procédé d'extraction d'une fraction phénolique à partir de liège granulé. Elle vise également l'utilisation de cette fraction phénolique dans des compositions intumescentes, qui peuvent être appliquées sur une surface d'un matériau afin de le protéger contre l'incendie, en dégageant des gaz qui protègent la couche contre l'inflammation, et en formant ensuite une barrière passive à faible conductivité thermique.

L'invention concerne en particulier le liège provenant de la variété végétale Quercus suber L.

### Etat de la technique

Le chêne-liège se trouve surtout dans le Sud de l'Europe et au pourtour de la mer Méditerranée (Portugal, Espagne, Italie, France, Algérie, Maroc, Tunisie). Il s'agit essentiellement de la variété Quercus suber L. Le chêne-liège est cultivé et exploité de manière industrielle pour récupérer sa couche d'écorce externe, le liège, qui connaît plusieurs utilisations industrielles.

Par ailleurs, pour des raisons de qualité, l'industrie du liège n'utilise qu'une partie de l'écorce récoltée ou susceptible d'être récoltée, qui doit être conforme à un cahier des charges. À titre d'exemple, le liège utilisé pour la fabrication de bouchons et de pièces massives en liège, qui sont des produits à relativement haute valeur ajoutée, provient typiquement d'arbres qui ont déjà subi un premier et un deuxième écorçage, alors que le liège provenant des deux premiers écorçages (dont le liège vierge, issu du premier écorçage) est utilisé typiquement, après réduction en granules, dans la fabrication de feuilles et plaques destinées au secteur du bâtiment ; cela représente des produits à relativement faible valeur ajoutée. L'industrie du liège génère par ailleurs des déchets de liège. Ces surplus ou ces déchets sont en règle générale brûlés, dans un cas idéal de manière à récupérer au moins leur pouvoir calorifique.

Il serait désirable de trouver de nouveaux débouchés pour le liège, sachant que l'arbre s'accommode bien de sols pauvres et résiste assez bien à la sécheresse et à l'incendie. Il existe également des forêts de chêne-liège sauvages qui ne sont actuellement pas exploitées faute de filière de valorisation locale du liège.

Le liège est composé essentiellement de subérine qui est une macromolécule lipidique, de lignine qui est une macromolécule polyphénolique, et de divers polysaccharides (dont la cellulose), et comporte également une quantité significative de composés organiques susceptibles d'être extraits à l'aide d'un solvant approprié et dans des conditions appropriées. La fraction massique des composés chimiques extractibles s'élève typiquement à environ 15 % ; elle dépend de l'origine géographique du liège, et il en est de même de sa composition chimique. En fonction des conditions d'extraction, certaines des macromolécules biologiques qui constituent le liège peuvent subir une hydrolyse partielle, qui peut conduire à l'augmentation de la fraction extractible.

L'extraction des composés organiques extractibles a été étudiée principalement sous deux aspects : premièrement, certains de ces composés sont susceptibles de migrer dans les liquides alimentaires en contact avec un bouchon de liège, dont ils peuvent altérer le goût ou l'odeur ; il serait désirable de pouvoir les extraire avant d'utiliser le bouchon en liège pour fermer une bouteille de liquide alimentaire. Les molécules visées, surtout pour une utilisation avec le vin, sont notamment le méthyl-isobornéol et ses dérivés, la géosmine, la méthylthio-éthyl-pyrazine, les alcools et cétones insaturées en C₈, et surtout les chloroanisoles, et plus particulièrement le trichloroanisole et le tétrachloroanisole.

Deuxièmement, il a été envisagé d'extraire ces composés afin de les valoriser, mais cela n'est pas exploité de manière industrielle, malgré de nombreux travaux de recherche publiés.

Un procédé industriel utilisé pour extraire les molécules qui dénaturent le vin est le procédé Champcork qui consiste à placer les bouchons en liège dans une enceinte saturée en vapeur d'eau à 130 °C et à une pression de 180 kPa pendant 18 - 20 minutes. D'autres procédés d'extraction à l'eau chaude impliquent l'application d'une pression atmosphérique (PT 104 221) ou une pression ne dépassant pas 7 bars (WO 2004/04995), une température de 120 °C à 230 °C à une pression comprise entre 2 bars et 30 bars (EP 1 104 345), des cycles de mise sous pression et de dépressurisation (EP 1 849 572, EP 1 108 507), l'application d'une pression réduite (EP 1 551 463), l'application d'une détente brusque (EP 2 355 964).

En ce qui concerne l'extraction de composés en vue de leur valorisation, le point de départ est formé par les procédés d'extraction d'écorces d'arbres dans l'industrie papetière qui se fait à l'eau bouillante à pression atmosphérique. Le document WO 2020/084106 décrit un tel procédé qui se déroule à 90 °C. Une publication récente est celle de P. Kilpeläinen et al., « Optimising and scaling up hot water extraction of tannins from Norway spruce and Scots pine bark », parue dans Industrial Crops & Products 192 (2023), 116089 (https://doi.org/10.1016/j.indcrop.2022.116089). Pour le liège, il ne semble pas exister de procédé industriellement exploité, mais uniquement une littérature assez vaste.

La publication « Valorization of Cork Using Subcritical Water » par M. Cunha et al., parue dans la revue Molecules 2020, 25, 4695 (doi : 10.3390/molecules25204695), décrit un procédé d'extraction en autoclave à 120-200 °C sous une pression constante de 100 bars. Sous ces conditions, on observe une forte croissance de la matière extractible lorsque la température de l'eau passe de 120 °C à 200 °C ; le rendement en composés phénoliques augmente d'un facteur cinq.

Un certain nombre de documents décrivent des procédés d'extraction avec des solvants organiques apolaires ou polaires, tels que l'éthanol ou le méthanol, possiblement mélangés avec de l'eau. À titre d'exemple, on cite ici EP 2 060 554, EP 3 724 312, CN 108 214 774 et EP 1 444 075. Certains de ces procédés utilisent un extracteur de type Soxhlet sous reflux.

Un grand nombre de documents décrivent des procédés d'extraction du liège à l'aide de fluides supercritiques. La plupart de ces documents utilisent le CO₂. L'extraction à l'aide du CO₂ supercritique est déjà utilisée industriellement dans d'autres domaines, notamment en génie alimentaire, cosmétique et pharmaceutique, soit pour purifier des matières solides, soit pour récupérer des molécules cibles en vue de leur valorisation. Ce fluide convient surtout à l'extraction de molécules apolaires. On cite ici à titre d'exemples EP 1 216 123, EP 2 404 647, EP 2 404 647, EP 2 396 153, DE 102 005 017963, WO 2005 25825, EP 2 014 344 et EP 2 799 199. Des co-solvants peuvent être utilisés, notamment l'eau, pour améliorer l'extraction de molécules polaires, comme décrit dans PT 116 340, PT 116 355 et EP 2 033 751.

Il existe également une vaste littérature sur le traitement du liège à l'eau oxygénée, qui vise en règle générale non pas à extraire des molécules pour les récupérer, mais à les détruire par oxydation ; on cite ici à titre d'exemple WO 2020/119462, WO 97/13628, US 5,098,447, PT 118 112.

L'extraction d'une fraction de composants organiques à partir d'un matériau végétal solide pose souvent le problème de la purification de la fraction obtenue en vue d'une utilisation spécifique, sachant que cette fraction peut représenter un mélange complexe. Il est parfois possible d'utiliser des conditions d'extraction qui favorisent certains types de molécules, ce qui peut simplifier le post-traitement de cette fraction après son extraction.

L'objectif de la présente invention n'est pas d'extraire le maximum de matière cible à partir du liège. L'objectif est de proposer un procédé qui optimise l'extraction en prenant en compte le coût de l'investissement, la consommation en énergie, solvant et matière première, sachant que la matière première est disponible abondamment et peu valorisée actuellement.

Plus précisément, les inventeurs se sont fixé l'objectif d'extraire de manière ciblée la fraction phénolique du liège, en vue d'une valorisation qui ne nécessite de préférence pas de post-traitement séparatif autre que l'évaporation du solvant (et dans un cas idéal, aucun post-traitement). Ils se sont fixés également comme objectif de proposer un procédé d'extraction qui génère aussi peu d'effluents nocifs que possible, et de préférence aucun effluent nocif. Ils se sont fixés également comme objectif de proposer un procédé qui soit très économe en énergie et en réactifs. Ils se sont fixés également comme objectif de proposer un procédé simple et facilement industrialisable, qui ne nécessite pas d'équipement coûteux, ni en ce qui concerne son coût d'investissement, ni en ce qui concerne son coût d'exploitation et son coût de maintenance.

### Objets de l'invention

Les inventeurs ont cherché à améliorer les méthodes existantes pour extraire une fraction phénolique.

Le liège est un matériau connu pour son caractère hydrophobe, qui n'est que faiblement mouillé par l'eau. On sait que l'eau et les solvants hydroalcooliques à forte proportion d'eau sont caractérisés par une tension de surface élevée pouvant entraver leur pénétration dans un matériau végétal. Par ailleurs, on sait (voir M. Aroso et al., « Cork: Current Technological Developments and Future Perspectives for this Natural, Renewable, and Sustainable Material », *ACS Sustainable Chem. Eng.,* vol. 5, no 12, p. 11130-11146, déc. 2017, doi : 10.1021/acssuschemeng.7b00751) qu'un procédé de type macération mécanique, ou un procédé d'extraction de poudre de liège sous reflux (extraction Soxhlet), donnent un maximum d'extraction des phénoliques pour une teneur d'éthanol dans l'eau d'environ 50 %. Les présents inventeurs ont refait et confirmé cette étude, sous reflux et aussi à température ambiante. Ces procédés proposés dans la publication citée d'Aroso présentent cependant des inconvénients, à savoir des temps de traitement très longs, et l'utilisation d'une forte proportion d'éthanol en mélange avec l'eau.

En partant toujours de la macération mécanique, qui représente certainement le procédé le plus simple qui soit, les inventeurs ont cherché à activer l'extraction par l'utilisation d'ultrasons. De manière surprenante, les inventeurs ont constaté que par rapport à la macération mécanique, l'extraction assistée par ultrasons ne permet pas d'améliorer le rendement d'extraction de manière significative. Contrairement à de nombreuses autres matières végétales, le phénomène de cavitation et déstructuration cellulaire, sur lequel repose le procédé d'extraction assistée par ultrasons, ne semble pas se produire avec la même efficacité dans le cas du liège, et notamment dans le liège vierge. Cela peut être dû à la structure cellulaire et à la grande élasticité du liège.

Les inventeurs ont alors trouvé un procédé de traitement statique sous pression qui donne un excellent résultat d'extraction de la fraction phénolique en utilisant comme solvant l'eau, sans aucun additif. Ce procédé d'extraction par solvant assistée par une haute pression est référencé ici sous le sigle ASE (Accelerated Solvent Extraction).

Les inventeurs ont trouvé également une utilisation de cette fraction dans des compositions intumescentes, qui est soit une utilisation de la phase solide recueillie après précipitation de la fraction phénolique à partir de la phase liquide, soit une utilisation directe de la phase liquide obtenue à partir du procédé d'extraction, éventuellement après une évaporation partielle du solvant pour augmenter sa concentration en composés phénoliques. Cette utilisation est une utilisation comme ingrédient dans des compositions intumescentes.

L'utilisation directe de la fraction liquide peut se faire dans des compositions intumescentes liquides ou pâteuses se présentant sous la forme de peintures destinées à recouvrir la surface d'un matériau à protéger contre l'incendie, tel que le bois, le métal, le plastique. La phase solide recueillie à partir de la phase liquide peut être introduite dans des compositions intumescentes solides ou pâteuses.

Selon l'invention, les problèmes posés ont été résolus par un procédé d'extraction d'une fraction de composés phénoliques à partir du liège, comprenant une étape de mise en contact d'une phase solide qui est formée par un granulat et/ou d'une poudre de liège, avec une phase liquide sous pression dans une enceinte, ladite phase liquide comportant au moins 80 % massiques d'eau et au plus 20 % massiques d'éthanol, ledit procédé étant caractérisé en ce que la température de l'eau est comprise entre environ 70 °C et environ 100 °C, et de préférence entre environ 70 °C et environ 90 °C, et en ce que la pression est d'au moins 30 bars et reste de préférence constante au cours du procédé.

Ce procédé d'extraction représente le premier objet de l'invention. De manière avantageuse, il peut être mis en œuvre avec du liège vierge. De manière avantageuse, il peut être mis en œuvre avec du liège provenant de la variété Quercus suber L.

Dans un mode de réalisation préféré, ladite phase liquide utilisée pour l'extraction comporte uniquement de l'eau.

Dans un mode de réalisation, la pression est comprise entre environ 30 bars et environ 200 bars, de préférence entre environ 50 bars et environ 150 bars, plus préférentiellement entre environ 50 bars et environ 140 bars, encore plus préférentiellement entre environ 60 bars et environ 140 bars. La durée du contact à ladite température et à ladite pression est comprise entre environ 10 minutes et environ 120 minutes, et de préférence entre environ 15 minutes et environ 60 minutes.

Dans un mode de réalisation avantageux, la température est comprise entre environ 70 °C et environ 90 °C, la pression est comprise entre environ 60 bars et environ 140 bars et la durée du contact est comprise entre environ 10 minutes et environ 40 minutes, et de préférence entre environ 20 minutes et environ 40 minutes.

Le procédé d'extraction est complété par la séparation ladite phase solide de ladite phase liquide, et par la récupération de ladite phase liquide en vue de sa valorisation.

Un deuxième objet de la présente invention est l'utilisation de ladite fraction de composés phénoliques obtenue par le procédé d'extraction selon l'invention, à l'état liquide ou solide, dans la fabrication de compositions intumescentes, et notamment de peintures intumescentes à base d'eau, lesdites compositions intumescentes étant destinées à l'utilisation dans l'ignifugation du bois et d'autres matières cellulosiques, des métaux et des matières plastiques. Dans un mode de réalisation avantageux, on utilise directement la fraction liquide issue du procédé d'extraction, éventuellement après une évaporation partielle du solvant pour augmenter sa concentration en composés phénoliques, dans des compositions intumescentes liquides ou pâteuses se présentant sous la forme de peintures destinées à recouvrir la surface d'un matériau à protéger contre l'incendie, tel que le bois, le métal, le plastique.

Un dernier objet de la présente invention est représenté par une composition intumescente, notamment peinture intumescente à base d'eau, destinée à l'utilisation dans l'ignifugation du bois et d'autres matières cellulosiques, des métaux et des matières plastiques, caractérisée en ce qu'elle comprend ladite fraction de composés phénoliques, à l'état liquide ou solide, obtenue par le procédé d'extraction selon l'invention.

### Brève description des figures

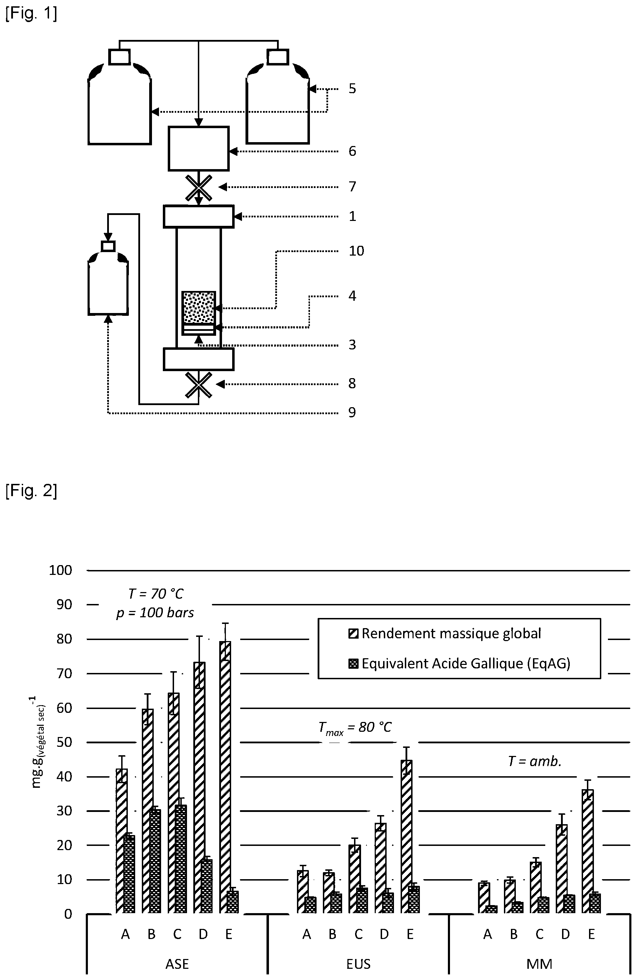

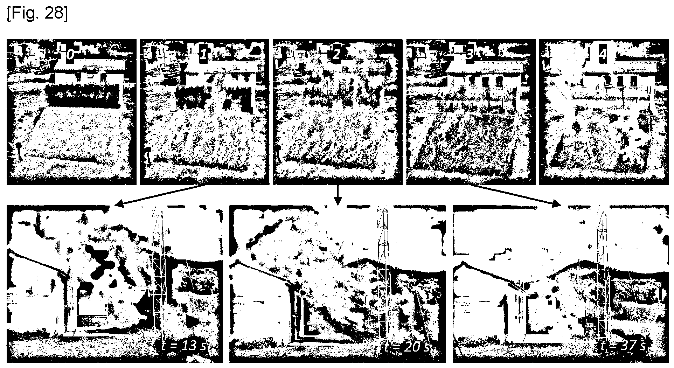

Les [Fig. 1] à [Fig. 28] illustrent différents aspects de l'invention, mais ne limitent pas sa portée.
[Fig. 1] montre de manière schématique et simplifiée une enceinte sous pression avec ses équipements périphériques, qui peut être utilisée pour mettre en oeuvre le procédé selon l'invention.
[Fig. 2] se rapporte à l'exemple 3 et montre la comparaison du rendement massique global de l'extraction de composés phénoliques du liège en utilisant trois procédés différents (ASE = Accelerated Solvent Extraction, i.e. le procédé selon l'invention ; EUS = Extraction Assistée par Ultrasons ; MM = Macération Mécanique) et cinq solvants différents marqués A (100 % eau), B (eau : éthanol = 75:25), C (eau : éthanol = 50 :50), D (eau : éthanol = 25 :75), E (100 % éthanol).
[Fig. 3] se rapporte à l'exemple 3 et montre la richesse des extraits en composés phénoliques, pour chacune des trois techniques d'extraction et chacun des cinq solvants étudiés.
[Fig. 4] se rapporte à l'exemple 3 et montre l'épuisement de la matrice végétale après deux extractions successives par le procédé ASE selon l'invention, pour chacun des cinq solvants étudiés.
[Fig. 5] est une autre présentation des données de la [Fig. 4].
[Fig. 6] se rapporte à l'exemple 3 et montre les indices ORAC (Oxygen Radical Absorbance Capacity) exprimés en équivalents Trolox (acide 6-hydroxy-2,5,7,8-tétraméthylchromane-2-carboxylique) en fonction du solvant utilisé, pour une extraction selon l'invention (procédé ASE).
[Fig. 7] se rapporte à l'exemple 3 et montre le rendement massique d'extraction en fonction du temps de contact, pour le procédé selon l'invention dans les conditions de référence 80°C et 100 bars avec le solvant A (eau).
[Fig. 8] se rapporte à l'exemple 6 et montre un chromatogramme CLHP-SM en mode SIM typique d'une fraction obtenue avec le procédé ASE selon l'invention en utilisant un mélange méthanol / eau de 80/20.
[Fig. 9] se rapporte à l'exemple 5 et montre la consommation moyenne de solvant par unité de masse extraite pour chacune des trois techniques d'extraction comparées, avec de l'eau dans les conditions de référence à 80 °C et 100 bars. L'unité de masse extraite est également exprimée en équivalent acide gallique.
[Fig. 10] se rapporte aux exemples 6 et 7 et montre de manière schématique le calorimètre à cône utilisé pour caractériser le comportement des compositions intumescentes étudiées.
[Fig. 11] se rapporte à l'exemple 6 et montre des photographies optiques de pastilles préparées à partir de différentes compositions intumescentes solides lors d'un essai dans un calorimètre à cône.
[Fig. 12] se rapporte à l'exemple 6 et montre la hauteur de gonflement des pastilles étudiées.
[Fig. 13] se rapporte à l'exemple 7 et montre la puissance thermique dégagée par des échantillons de planche de bois de sapin revêtue de différentes peintures intumescentes.
[Fig. 14] se rapporte à l'exemple 8 et montre le rendement massique d'extraction global en fonction de la pression d'extraction, pour des essais d'extraction à 80 °C pendant 20 minutes.
[Fig. 15] se rapporte à l'exemple 8 et montre une représentation simplifiée des mêmes données que celles de la [Fig. 14].

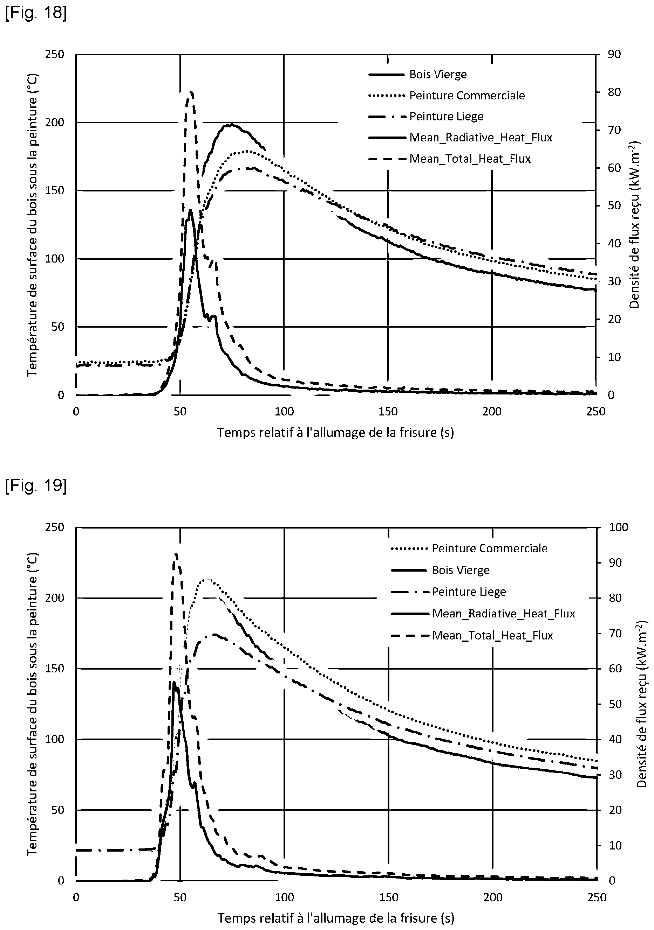

[Fig. 16], [Fig. 17], [Fig. 18], [Fig. 19] et [Fig. 20] se rapportent à l'exemple 9 et documentent une première série de cinq essais de compositions intumescentes selon l'invention et selon l'état de la technique. Les courbes représentent la température du bois sous la peinture en fonction du temps relatif à l'allumage de la frisure.
[Fig. 21], [Fig. 22] et [Fig. 23] se rapportent à l'exemple 9 et documentent une deuxième série de trois essais de peintures intumescentes selon l'état de la technique ; les courbes représentent la température du bois sous la peinture en fonction du temps relatif à l'allumage de la frisure.
[Fig. 24] et [Fig. 25] se rapportent à l'exemple 9 et représentent l'évolution de l'épaisseur moyenne [Fig. 24] et la vitesse de croissance [Fig. 25] des couches intumescentes développées à partir des peintures intumescentes en fonction du temps d'exposition à un feu.
[Fig. 26], [Fig. 27] et [Fig. 28] se rapportent à l'exemple 9. [Fig. 26] montre trois vues de la plateforme d'essais. [Fig. 27] montre de manière schématique l'agencement des peintures sur un volet en bois. [Fig. 28] montre une séquence de photographies d'un essai à pleine échelle sur la plateforme d'essai, au début de l'essai, après 13 secondes, 20 secondes et 37 secondes, et à la fin de l'essai.

### Description détaillée

Sauf indication contraire, toutes les indications en pourcents qui se rapportent à une composition de matière sont données en pourcents massiques par rapport à la masse totale de ladite composition.

Le procédé selon l'invention peut être mis en œuvre avec du liège, et notamment du liège de la variété Quercus suber L. Il peut s'agir de liège dit de reproduction (issu du troisième écorçage et des écorçages suivants), ou de liège issu d'écorçages plus précoces. En particulier, l'invention peut être mise en œuvre avec du liège vierge, issu d'un premier écorçage, qui ne peut être utilisé pour la fabrication de bouchons, et dont les autres utilisations sont économiquement peu intéressantes. Ce type de liège est en effet abondamment disponible dans les régions où la culture du liège a été abandonnée pour son manque de rentabilité. Or, la conservation des forêts de liège (suberaies) mérite d'être encouragée car un chêne-liège exploité absorberait significativement plus de CO₂ que la plupart d'autres arbres susceptibles de peupler le même terrain.

Le procédé selon l'invention peut aussi être mis en œuvre avec des déchets et restes de liège, tels qu'ils sont par exemple générés lors de la fabrication de bouchons et d'autres produits en liège.

Dans le procédé selon l'invention, le liège est utilisé sous forme de granulat et/ou de poudre : le liège est broyé. La taille moyenne des particules, déterminée par tamisage, se situe avantageusement entre environ 0,1 mm et environ 5 mm, de préférence entre environ 0,2 mm et environ 3 mm, et encore plus préférentiellement entre environ 0,2 mm et environ 2 mm. Pour les morceaux de taille trop grande, l'extraction reste incomplète à cause de la faible profondeur de pénétration du solvant polaire dans le matériau hydrophobe, même sous forte pression. Pour les poudres trop fines, on observe une agglomération qui nuit également à la pénétration du solvant, et qui complique la filtration en fin du procédé. Avant son utilisation dans le procédé selon l'invention, le liège broyé peut être tamisé pour éliminer des morceaux trop grands et des corps étrangers.

Le granulat est introduit dans un récipient qui est ensuite fermé hermétiquement. On introduit ensuite la phase liquide (i.e. le solvant) utilisée pour l'extraction. Ce solvant est mis sous pression. Ledit solvant d'extraction est un solvant polaire, qui comprend une majorité massique d'eau ; de préférence on utilise uniquement de l'eau.

Ensuite, le mélange formé par la phase solide et la phase liquide est chauffé. Selon l'invention, la température du mélange formé par le liège et le solvant lors de l'exécution du procédé d'extraction se situe entre environ 60 °C et environ 120 °C, de préférence entre environ 70 °C et environ 100 °C, et plus préférentiellement entre environ 70 °C et environ 90 °C, et encore plus préférentiellement entre environ 75 °C et environ 85 °C. La température optimale est d'environ 80 °C.

La mise sous pression est avantageusement réalisée directement avec la phase liquide, en utilisant une pompe. La pression se situe entre environ 30 bars et environ 200 bars. De préférence, la pression se situe entre environ 50 bars et environ 150 bars, et encore plus préférentiellement entre environ 60 bars et environ 140 bars. À titre d'exemple, une pression d'environ 100 bars convient. Au-delà de cette valeur de pression, le rendement massique global du procédé n'augmente plus beaucoup. Compte tenu du fait que l'exploitation du procédé à très haute pression nécessite un appareillage adapté et coûteux, et compte tenu du risque inhérent à un procédé industriel exploité à très haute pression, on préfère ne pas dépasser une valeur d'environ 150 bars, et de préférence on préfère ne pas dépasser une valeur d'environ 120 bars ou encore plus préférentiellement de ne pas dépasser une valeur de pression d'environ 100 bars.

On notera qu'à une température de 80 °C et une pression qui se situe dans le domaine de l'invention, l'eau n'est pas en ébullition. Le fait de ne pas utiliser de l'eau à une température supérieure à 100 °C dans le procédé selon l'invention présente l'avantage qu'en cas de fuite accidentelle, la quantité de vapeur d'eau qui se répand reste très limitée.

La pression est de préférence une pression statique ; cela représente aussi le mode de réalisation le plus simple. Dans le cadre de l'invention, il est possible de faire varier la pression au cours du procédé, notamment de manière continue ou discontinue, et/ou de manière périodique ou non ; il ne s'agit cependant pas de modes de réalisation préférés.

La durée de contact entre la phase solide et le solvant d'extraction dans les conditions de température et de pression qui caractérisent le procédé d'extraction selon l'invention est typiquement de l'ordre de 5 minutes à 120 minutes, de préférence entre environ 10 minutes et environ 90 minutes, plus préférentiellement entre environ 15 minutes et environ 60 minutes. À titre d'exemple, pour une température comprise entre environ 70 °C et environ 90 °C, et une pression comprise entre environ 60 bars et environ 140 bars, une durée de contact comprise entre environ 10 minutes et environ 40 minutes convient, et de préférence entre environ 15 minutes et environ 35 minutes, et encore plus préférentiellement entre environ 20 minutes et environ 35 minutes. Il n'est pas utile de prévoir une durée de contact plus longue, mais le fait de prévoir une durée de contact plus longue ne présente pas d'inconvénient autre qu'économique, dans la mesure où il augmente inutilement le temps de cycle et immobilise le récipient.

Il est possible de prévoir un moyen d'agitation pour remuer les granules de liège lors de leur macération sous pression, mais cela n'est pas nécessaire. L'absence de moyen d'agitation simplifie considérablement la construction du récipient.

À l'issue de la durée de contact prévue, on détend la pression, on fait sortir le mélange du réacteur, et on sépare la phase solide (appelée macérat) de la phase liquide. Pour cela, on peut utiliser par exemple un dispositif de filtration, qui peut être en acier inoxydable (inox).

Le macérat peut être soumis à un deuxième cycle d'extraction, qui aura cependant un rendement inférieur au premier cycle d'extraction, et qui peut ne pas présenter d'intérêt économique. Ledit deuxième cycle d'extraction peut se dérouler dans les mêmes conditions que le premier, ou dans des conditions différentes. Dans un mode de réalisation avantageux, on n'utilise pas de deuxième cycle d'extraction. En effet, dans les conditions optimales du procédé selon l'invention (80 °C, entre 60 bars et 140 bars, 20 minutes) le rendement massique de la deuxième extraction se situe entre environ 10 % et environ 25 % de celui de la première extraction, et typiquement entre environ 13 % et environ 18 %. À titre d'exemple, on a trouvé à 100 bars un rendement massique de 42,3 (exprimé en milligrammes d'extrait par gramme de végétal sec) pour la première extraction, et de 6,9 pour la deuxième.

Le macérat, qu'il soit issu du premier ou du deuxième cycle d'extraction, peut être séché et utilisé dans tout procédé connu utilisant du granulat de liège, tel que la fabrication de feuilles ou plaques destinées à l'utilisation dans le secteur du bâtiment.

La phase liquide séparée du macérat est récupérée. Elle comporte la fraction de composés phénoliques. Elle peut être utilisée dans la fabrication de compositions intumescentes, et notamment de peintures intumescentes à base d'eau. Cette utilisation peut être directe, par introduction de ladite phase liquide (éventuellement partiellement concentrée par évaporation partielle du solvant) dans une composition de peinture. Cette utilisation peut aussi être indirecte, par introduction des composés phénoliques solides récupérés dans ladite phase liquide (notamment par évaporation de l'eau) dans une composition intumescente.

Dans lesdites compositions intumescentes, et notamment les peintures intumescentes à base d'eau, ladite fraction phénolique agit comme source de carbone. Ces compositions intumescentes comprennent typiquement encore un agent gonflant, par exemple de la mélamine, et une source d'acide, par exemple du polyphosphate d'ammonium [NH₄PO₃]ₙ(OH)₂. On peut utiliser par exemple le polyphosphate d'ammonium vendu sous la marque Exolit^{®} et la désignation AP 422.

D'une manière générale, selon l'invention, la fraction phénolique peut remplacer, dans une composition intumescente de type connue, l'acide gallique ou le pentaérythritol qui sont habituellement utilisés comme source de carbone. Ce remplacement peut être partiel ou total. On utilise avantageusement un rapport massique d'environ 1: 3 entre la source de carbone et la source d'acide. Dans un mode de réalisation avantageux on incorpore la phase liquide issue du procédé selon l'invention, directement ou après une étape de concentration, dans une composition intumescente qui se présente sous la forme d'une peinture. La plupart de ces peintures intumescentes sont réalisées à base d'eau, et il est un des avantages de la présente invention que la phase liquide issue du procédé d'extraction selon l'invention peut être utilisée directement en tant que phase aqueuse dans une telle peinture intumescente à base d'eau.

On peut également introduire la fraction phénolique extraite du liège à l'état solide, notamment dans des compositions intumescentes solides ou pâteuses.

Par rapport aux compositions intumescentes connues, qui incorporent des composés phénoliques, la composition phénolique issue du procédé d'extraction selon l'invention présente un spectre de composition et un spectre d'impuretés spécifiques. Cela permet de distinguer ces compositions de celles connues, qui sont élaborées à partir de composés phénoliques purs.

Ces compositions intumescentes, et notamment ces peintures intumescentes, peuvent être utilisées notamment pour ignifuger le bois et d'autres matières cellulosiques, les métaux et des matières plastiques. Ces compositions, et notamment ces peintures, sont appliquées de la même manière que les compositions intumescentes connues, qu'elles peuvent remplacer totalement ou partiellement.

Comme cela a été expliqué ci-dessus, le procédé d'extraction selon l'invention peut être réalisé avec de l'eau. Pour extraire de manière sélective les fractions phénoliques, l'eau donne de meilleurs résultats qu'un mélange un peu moins polaire (comportant par exemple 25 % d'éthanol et 75 % d'eau) ; par rapport à un mélange comportant une plus grande fraction d'éthanol la différence en termes de rendement d'extraction en faveur de l'eau devient très significative.

L'avantage d'utiliser de l'eau plutôt qu'un mélange éthanol-eau est multiple. Un premier avantage est le coût du solvant. Un deuxième avantage est que lorsque l'on souhaite évaporer, totalement ou partiellement, le solvant, par exemple pour augmenter la concentration de la fraction phénolique, ou pour la précipiter, on récupérerait à partir d'une solution eau-éthanol une fraction éthanolique et une fraction aqueuse, qui doivent être recueillies et gérées séparément. Un troisième avantage est la difficulté de valoriser une fraction phénolique liquide comportant de l'éthanol. Une fraction liquide phénolique comportant un mélange d'eau et d'éthanol n'est pas forcément compatible, d'un point de vue chimique et d'un point de vue réglementaire, avec une peinture à base d'eau. L'avantage du procédé d'extraction selon l'invention utilisant de l'eau est la facilité avec laquelle la fraction liquide peut être introduite directement dans une composition intumescente liquide.

### Exemples

### Exemple 1 : Appareillage et procédure générale d'extraction

Les essais d'extraction ont été effectués avec un solvant polaire qui était de l'eau (solvant A), de l'éthanol (solvant E) ou un mélange d'eau et d'éthanol à des proportions différentes (solvant B : 75% d'eau ; solvant C : 50% d'eau ; solvant D : 25% d'eau).

L'extraction assistée par pression (abrégé ici : EAP) a été effectuée dans un appareil représenté sur la [Fig. 1]. Il comprend une cellule d'extraction 1 avec des parois en acier inoxydable (inox), au sein de laquelle un espace réactionnel 2 est délimité par un fritté 3 en inox. Un filtre 4 en cellulose et fibre de verre est placé au-dessus du fritté 3. Le granulat de liège 10 dont il s'agit d'extraire la fraction phénolique se trouve au-dessus de ce filtre 4. Le solvant est approvisionné dans des réservoirs 5 et introduit dans la cellule 1 par une pompe 6 à travers une soupape de sécurité 7. La sortie de la cellule d'extraction 1 est fermée par une vanne statique 8. Après l'extraction, le solvant est récupéré dans une bouteille de récupération 9. La cellule 1 comporte des moyens de chauffage (non représentés sur la figure).

Après l'extraction, le macérat est filtré et traité à l'évaporateur rotatif à 60 °C jusqu'à évaporation complète du solvant, afin d'obtenir une poudre brune. La poudre est pesée pour calculer le rendement massique de l'extraction en milligrammes par millilitre de solvant et en milligrammes de matière extraite par gramme de matière végétale sèche. Les échantillons de poudre sont conservés au congélateur à -20 °C. Le solvant récupéré à l'issue de l'extraction est soumis à différents essais d'analyse chimique.

À titre de comparaison, on a effectué des essais de macération sous agitation mécanique (abrégé ici : MM) : 10 g de liège vierge broyé ont été mis en contact avec 200 mL de solvant sous agitation à 180 rpm et à température ambiante pendant 6 heures. Cette durée permet d'atteindre un plateau d'équilibre au-delà duquel le rendement d'extraction n'est plus impacté par la durée d'extraction.

Également à titre de comparaison, on a effectué des essais d'extraction assistée par ultrasons (abrégé ici : EUS) avec un sonicateur homogénéisateur à sonde immersible de type UP400St (société Hielscher) : 20 g de liège vierge broyé ont été mis en contact avec 400 mL de solvant pendant 30 minutes à 80 °C, avec une fréquence de sonication de 24 kHz et une puissance de sonication de 100 W.

### Exemple 2 : Procédures générales d'analyse et de caractérisation

Le dosage des phénols totaux dans le solvant est effectué par le réactif de Folin-Ciocalteu, qui est un mélange d'acide phosphomolybdique (H₃PMo₁₂O₄₀) et d'acide phosphotungstique (H₃PW₁₂O₁₄). Ce réactif est réduit par les composés phénoliques et polyphénoliques en un mélange d'oxydes bleus de tungstène (W₈O₂₃) et molybdène (Mo₈O₂₃). La coloration bleue est utilisée pour une mesure colorimétrique à 750 nm en utilisant comme standard de calibration l'acide gallique. La mesure est effectuée dans une solution légèrement basique comportant 7,5 % massique de Na₂CO₃, après un temps d'incubation de 30 minutes à 25°C après agitation.

Le potentiel antiradicalaire a été évalué par la méthode ORAC (Oxygen Radical Absorbance Capacity) qui fait référence pour l'homme du métier, telle que décrite dans la publication de R. L. Prior, X. Wu and K. Schaich, "Standardized Methods for the Determination of Antioxidant Capacity and Phenolics in Foods and Dietary Supplements," Journal of Agricultural and Food Chemistry, Vol. 53, No. 10, 2005, pp. 4290-4302 ; doi:10.1021/jf0502698.

Cette méthode est basée sur la mesure de l'oxydation de la fluorescéine par les radicaux issus de la dégradation thermique du 2,2'-azobis (2-amido-propane) dihydrochlorure (abrégé AAPH) qui survient au-dessus de 35 °C. En présence de composés antioxydants, la dégradation de la fluorescéine est retardée notamment par leur pouvoir antiradicalaire.

La cinétique de décomposition de la fluorescéine est évaluée dans un blanc, puis en présence de standard ou d'extrait de liège à une concentration connue. La fluorescence est mesurée à une longueur d'onde d'émission de 530 nm toutes les minutes pendant 90 minutes avec une longueur d'onde d'excitation de 485 nm. La courbe de décomposition obtenue est utilisée pour calculer le paramètre appelé AUC (Area Under Curve, c'est-à-dire l'aire sous la courbe cinétique) exprimé par l'expression AUC = 1 + f₁/f₀ + f₁/f₀ + f₂/f₀ + fn/f₀ + [...] + f₉₀/f₀ où f₀ est l'intensité de la fluorescence à t₀ = zéro minutes et fₙ est l'intensité de la fluorescence à tₙ minutes. Une calibration est établie avec l'acide 6-hydroxy-2,5,7,8-tétraméthylchromane-2-carboxylique (abrégé Trolox) ; cette calibration exprime le paramètre AUCₙₑₜₜₑ en fonction de la concentration de Trolox. Cette calibration est utilisée pour exprimer l'AUCₙₑₜₜₑ déterminée sur les extraits de liège en millimolaires d'équivalent Trolox (abrégé EqT) par gramme d'extrait sec. Ce dosage spectrophotométrique permet une évaluation rapide des extraits de liège comportant des fractions phénoliques.

Un fractionnement de la poudre de la fraction phénolique a été effectué sur colonne de silice, à l'aide d'une séquence de solvants dichlorométhane - méthanol - eau et leurs mélanges homogènes. Les fractions ou extraits d'intérêt ont été analysés par chromatographie en phase liquide à haute pression (CLHP) couplée à un spectromètre de masse (SM) quadripôle (technique dite CLHP-SM) en mode SIM (Selective Ion Monitoring).

### Exemple 3 : Comparaison des trois méthodes d'extraction

On a comparé ici les trois méthodes ASE (selon l'invention), EUS et MM.

[Fig. 2] montre la comparaison du rendement massique global et du rendement en équivalent acide gallique (EqAG) pour la méthode EAP (70 °C ; 100 bars), EUS (80 °C) et MM (température ambiante) et pour chacun des cinq solvants utilisés (A = 100 % eau ; B = 75 % eau + 25 % éthanol ; C = 50 % eau + 50 % éthanol ; D = 25 % eau + 75 % éthanol ; E = 100 % éthanol). Le procédé ASE montre un clair avantage. Le rendement massique global est meilleur avec de l'éthanol pur, mais avec ce procédé, l'éthanol ne convient pas pour extraire la fraction phénolique (représentée par le paramètre EqAG), alors qu'on ne voit pas de différence avec les procédés EUS et MM.

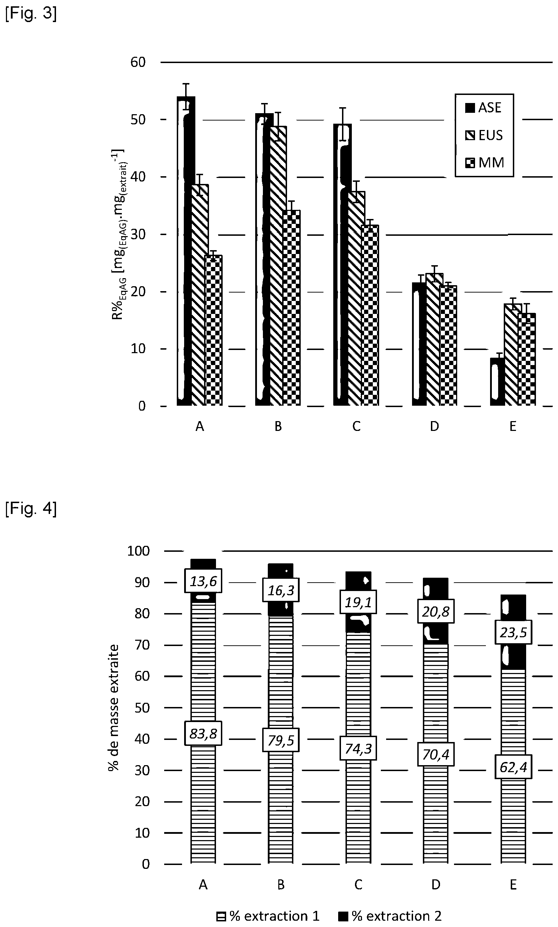

[Fig. 3] montre pour chacun des cinq solvants utilisés la richesse des extraits en composés phénoliques, désignée R%_{EqAG} qui est égal à 100 (n_{EqAG} / η), où R est exprimé en pourcent, η désigne le rendement massique global exprimé en milligramme d'extrait par gramme de végétal sec, et η_{EqAG} désigne le rendement massique en EqAG exprimé en milligramme d'EqAG par gramme de végétal sec.

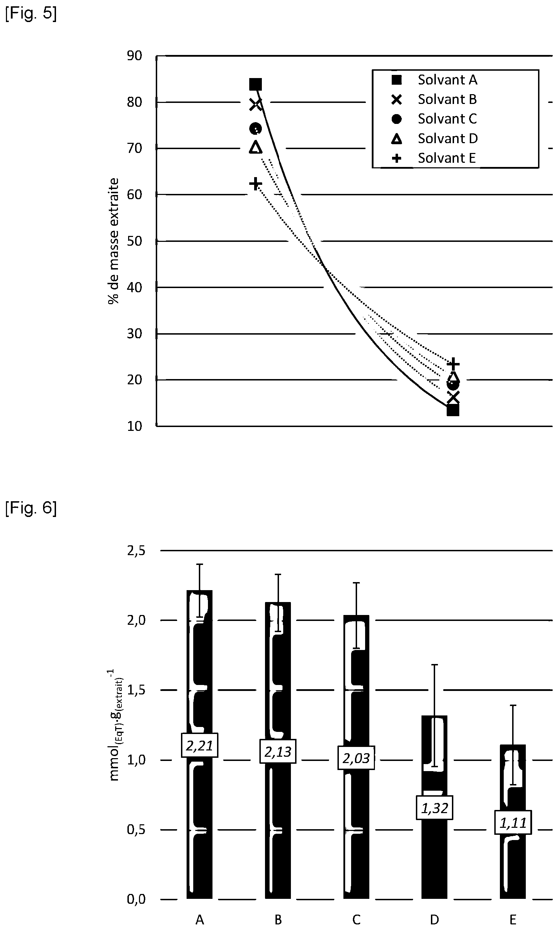

[Fig. 4] montre pour chacun des cinq solvants utilisés l'épuisement de la matrice végétale après deux extractions successives. On voit que le solvant A permet la meilleure extraction par une première extraction, mais le gain supplémentaire d'une deuxième extraction est le plus faible. Cette conclusion ressort plus clairement de la [Fig. 5] qui présente les données de la [Fig. 4] d'une autre manière.

[Fig. 6] montre l'indice ORAC en équivalents Trolox (EqT) pour les cinq solvants étudiés. Une valeur élevée pour l'indicateur EqT témoigne d'un plus fort potentiel de piégeage des radicaux libres et constitue un indicateur de l'abondance en fonctions hydroxyles et phénols. On voit que le solvant A permet la meilleure extraction.

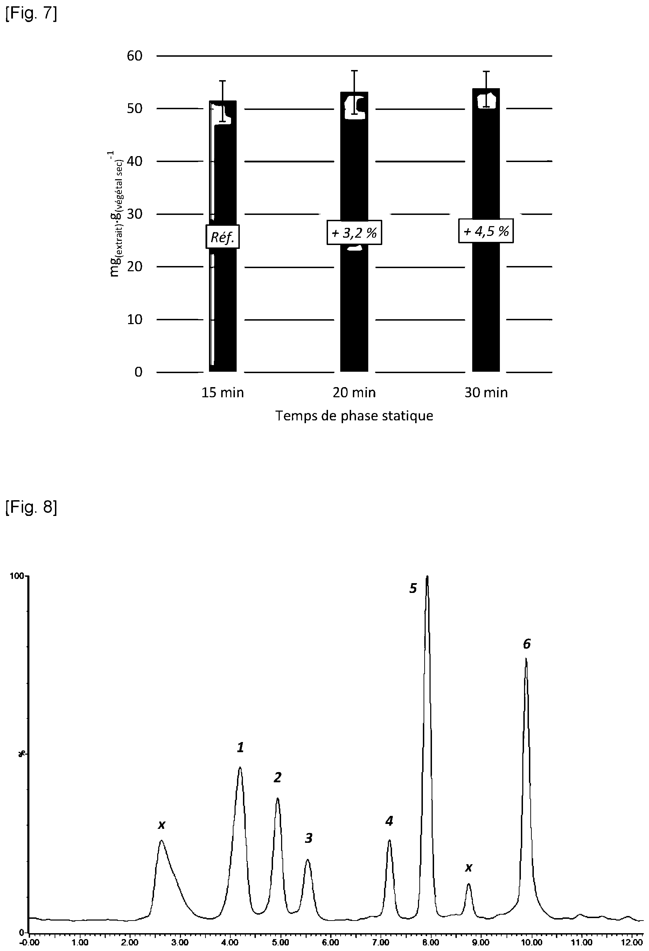

[Fig. 7] montre le rendement massique d'extraction en fonction du temps de contact, pour les conditions de référence 80 °C et 100 bars avec le solvant A (100 % eau). On voit que dans ces conditions, l'augmentation du rendement est faible lorsque le temps de contact double de 15 minutes à 30 minutes. Dans ces conditions, une durée d'environ 15 minutes serait suffisante pour un procédé industriel.

### Exemple 4 : Identification des principaux composés chimiques dans l'extrait

On a analysé des extraits obtenus avec le solvant A dans les conditions de référence 80 °C et 100 bars. [Fig. 8] montre un chromatogramme CLHP-SM en mode SIM typique d'une fraction obtenue avec un mélange méthanol / eau de 80/20. Les composés suivants ont été identifiés : pic 1 : acide gallique ; pic 2 : castalagine / vescalagine (non séparés) ; pic 3 : acide protocatéchique ; pic 4 : aldéhyde protocatéchique ; pic 5 : acide caféique ; pic 6 : acide ellagique. Deux pics marqués « x » n'ont pas été identifiés.

### Exemple 5 : Consommation de solvant

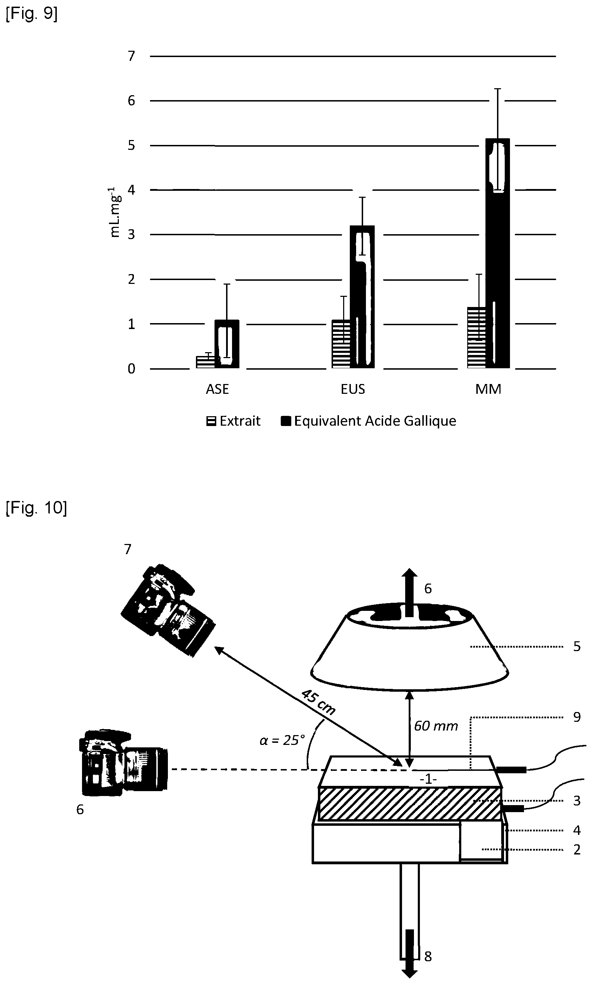

On a comparé pour les trois procédés ASE, EUS et MM la consommation moyenne de solvant par unité de masse extraite dans les conditions de référence avec l'eau. Le résultat est montré sur la [Fig. 9]. On observe un avantage pour le procédé ASE selon l'invention. La comparaison des consommations moyennes par unité de masse extraite (masse totale ou équivalent en acide gallique) ne montre pas de différence significative entre les procédés ASE et MM ; cette comparaison dépend cependant de la durée du procédé MM qui a été prise ici pour six heures, pendant lesquelles le mélange doit être maintenu à la température du procédé. La consommation énergétique du procédé de macération assisté par ultrasons en revanche semble être significativement plus forte.

### Exemple 6 : Utilisation de l'extrait polyphénolique liquide dans des compositions intumescentes solides

On a préparé des pastilles solides de forme cylindrique (hauteur environ 10 mm, diamètre environ 13 mm, masse environ 2 grammes) par compactage (pendant 1 minute sous une pression de 10 tonnes dans une presse hydraulique à commande manuelle) d'un mélange de poudres comprenant une mélamine en tant qu'agent gonflant, du polyphosphate d'ammonium de type AP 422 en tant que source d'acide, et de l'extrait sec de liège obtenu par le procédé d'extraction selon l'invention.

On a effectué des essais dans un calorimètre à cône, qui est illustré sur la [Fig. 10]. La pastille 1 formée par la composition intumescente solide a été placée au centre d'une plaque de céramique 2 recouverte d'une feuille d'aluminium 3 et disposée dans un porte-échantillon 4 horizontal. Le flux de chaleur provenait d'un cône 5 chauffant ; pour ces essais ce flux était fixé à une irradiance de 50 kW.m⁻². Les gaz dégagés lors de l'essai sont évacués par une hotte aspirant à travers le cône ; cette aspiration est symbolisée par la flèche marquée du signe de référence 6. L'appareil comporte deux caméras disposées comme montré sur la figure, à savoir une première caméra 6 pour la lumière visible et une deuxième caméra 7 pour le rayonnement infrarouge. Une cellule de pesée 8 permet de suivre l'évolution de la masse de l'échantillon 1, un ou plusieurs thermocouples 9 permettent de suivre sa température.

Après 15 minutes l'échantillon 1 était retiré, mesuré et conservé hermétiquement. À l'aide de la première caméra 6 placée à 50 cm dans le plan de la face supérieure de la pastille, on a enregistré une image par seconde pour suivre l'expansion de la pastille au cours de l'essai et ce jusqu'à l'affaissement de la meringue formée en dehors du champ de mesure de la caméra. On a également enregistré des images avec la deuxième caméra 7 dans le domaine infrarouge.

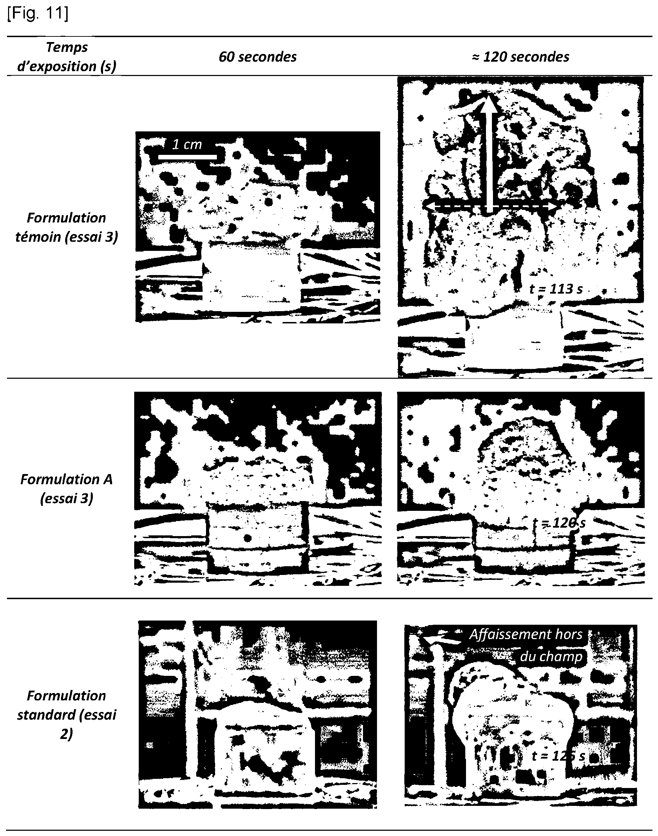

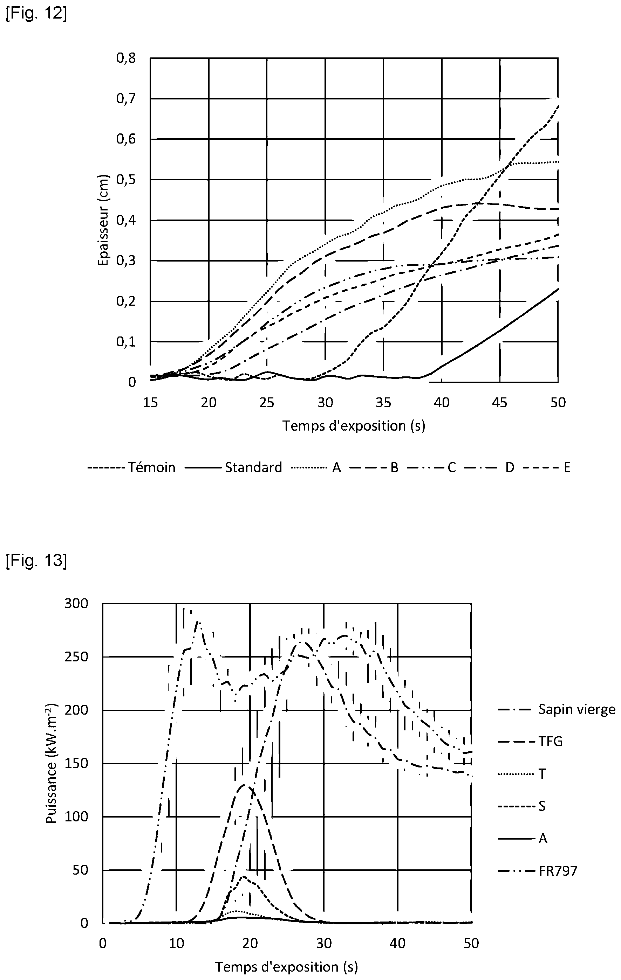

Comme cela ressort de la [Fig.11], lors de l'exposition à un flux de chaleur la pastille gonfle. La hauteur du gonflement, la densité et la durabilité de cette pastille gonflée dépendent de sa composition initiale. La [Fig. 12] montre l'épaisseur de la couche de gonflement en fonction du temps d'exposition. Les échantillons A, B, C, D et E correspondent à différentes fractions de l'extrait phénolique de liège qui a fait l'objet d'une séparation chromatographique. On observe que ces différentes fractions gonflent plus vite que le produit commercial (« Témoin ») et le produit comportant l'acide gallique comme composant phénolique (« Standard »). Par la suite, la couche formée avec le produit témoin devient plus épaisse.

### Exemple 7 : Utilisation de l'extrait polyphénolique liquide dans des compositions intumescentes liquides

On a formulé différentes compositions intumescentes en utilisant la même base de peinture, à savoir le liant vendu sous la marque Emultex^{™} (société Synthomer). Il s'agit d'un copolymère vinylique composé d'acétate de vinyle et de néodécanoate de vinyle, approvisionné sous la forme d'un colloïde en solution aqueuse. Sa température de transition vitreuse est de 12 °C, sa viscosité à 20 °C est de 1100 mPa.s⁻¹, son résidu sec est de 55% massiques. Toutes les compositions formulées comprenaient également en tant que source d'acide le polyphosphate d'ammonium AP 422 et en tant qu'agent gonflant de la mélamine. Le rapport massique entre le liant sec et le mélange intumescent dans son ensemble était de 1 : 2. À titre de source de carbone on a ajouté soit la phase liquide issue du procédé d'extraction selon l'invention, soit, pour calibrer les fonctions phénoliques, de l'acide gallique, soit, à titre de comparaison, du pentaérythritol. On a également approvisionné une peinture intumescente du commerce à titre de témoin (Teknosafe^{™} Flame Guard 2467-10 fabriquée par la société Teknos) ; il s'agit d'une peinture à base d'eau spécifiée pour la protection du bois. Elle contient également du dipentaérythritol et du polyphosphate d'ammonium.

On a revêtu des planches de bois brut avec ces compositions selon un protocole normalisé, avec une masse surfacique de peinture sèche de l'ordre de (250 ± 25) g/m². La nomenclature des échantillons était la suivante : A = extrait de liège selon l'invention, T = témoin, S = standard, TFG = Teknosafe Flame Guard.

On a déterminé l'émissivité thermique à l'aide du calorimètre à cône décrit en relation avec l'exemple 6. On observe dans tous les cas une baisse de l'émissivité thermique ε après 10 secondes d'exposition au flux de chaleur, due à un noircissement généralisé de la surface. Les résultats sont rassemblés au tableau 1. On note que la peinture A conduit à des performances très proches de celles du produit commercial TFG.

**Tableau 1**

| | Peinture TFG | Peinture T | Peinture A | Peinture S |
|---|---|---|---|---|
| ε_{t = 0 s} | 0,975 | 0 ,961 | 0,985 | 0,965 |
| ε_{t = 10 s} | 0,942 | 0,94 | 0,946 | 0,952 |

La [Fig. 13] montre la puissance thermique dégagée par l'échantillon en fonction du temps d'exposition à un flux de chaleur de 50 kW/m² pendant les 50 premières secondes d'exposition. Entre 15 et 25 secondes d'exposition des échantillons, on a observé une inflammation transitoire (flashing) de tous les échantillons traités par une composition intumescente. Cela est probablement dû à l'inflammation des gaz de pyrolyse émis par le système substrat - revêtement. On observe systématiquement l'extinction de cette flamme qui intervient typiquement après 5 à 10 secondes. Elle peut être due au dégagement de gaz inertes lors de la réaction d'intumescence du système ternaire (dégagement de l'agent gonflant et libération d'eau par réaction de condensation), et à l'initiation du développement de la couche intumescente qui entrave le dégagement de gaz de pyrolyse inflammable par le substrat (bois). Parmi les trois échantillons traités, celui selon l'invention (échantillon A) montre un dégagement de chaleur particulièrement faible. (L'échantillon référencé FR797 correspond à une peinture à base vinylique sans composition intumescente).

Une fois que le développement de la couche intumescente est assez avancé, en moyenne après 25 secondes d'exposition, le système atteint un état d'équilibre avec une puissance dégagée très faible voire nulle. Pendant cette phase, la couche d'intumescence agit comme bouclier thermique. Par la suite, après la fin de la réaction d'intumescence, après consommation totale des réactifs et si la sollicitation thermique externe ne diminue pas, la structure charbonnée subit une dégradation visuellement perceptible ; l'apparition de craquelures rend la couche localement perméable aux gaz de pyrolyse, et elle finira par ne plus pouvoir jouer son rôle de manière notable. À plus longue échelle de temps, parmi les trois compositions intumescentes testées, celle qui incorpore la fraction phénolique extraite du liège est la moins performante. Cela ne dément cependant pas l'intérêt que présentent ces extraits pour la formulation de peintures intumescentes, mais appelle à une optimisation de la formulation desdites peintures pour éviter la formation de craquelures.

Les exemples 6 et 7 montrent clairement l'aptitude des extraits phénoliques de liège obtenus par le procédé selon l'invention d'être utilisés comme source de carbone dans des compositions intumescentes.

### Exemple 8 : Influence de la pression sur le rendement d'extraction global du liège

On a répété l'extraction par le procédé ASE tel que décrit ci-dessus, dans les conditions suivantes : température = 80 °C, durée d'extraction = 20 minutes, pression fixée à une valeur entre 0 bar et 200 bars.

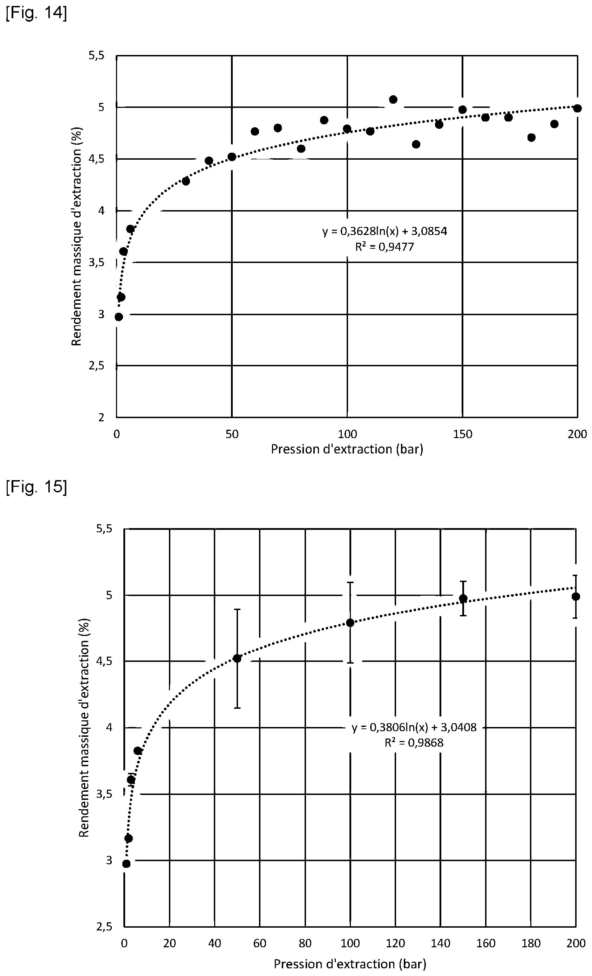

Les résultats sont montrés sur la [Fig. 14]. On observe une augmentation significative du rendement massique global d'extraction entre 1 bar et environ 60 bars. Au-delà d'une valeur d'environ 60 bars, le rendement massique global semble tendre vers une limite qui est atteinte aux environs de 100 bars. L'augmentation de la pression au-delà de 100 bars ne présente que peu d'intérêt pour exécuter le procédé. La [Fig. 15] montre les mêmes résultats que la [Fig. 14] mais fait apparaitre les écarts-types observés lors de la réalisation des différentes extractions à des paliers fixés à 3 bars, 50 bars, 100 bars, 150 bars et 200 bars.

### Exemple 9 : Essais de performance de compositions intumescentes à pleine échelle

### a) Description de la plateforme d'essais

Ces essais ont été exécutés sur une plateforme d'essais à pleine échelle conçue pour déterminer les sollicitations thermiques engendrées par la combustion de végétations ornementales au voisinage d'habitations, pour mesurer la puissance dégagée par un feu pleinement développé de ces végétaux, et pour évaluer la réaction au feu d'éléments de constructions y faisant face : cette plateforme reproduit des conditions typiques d'interfaces forêt-habitat qui représentent des zones à risque en cas de feu de végétation.

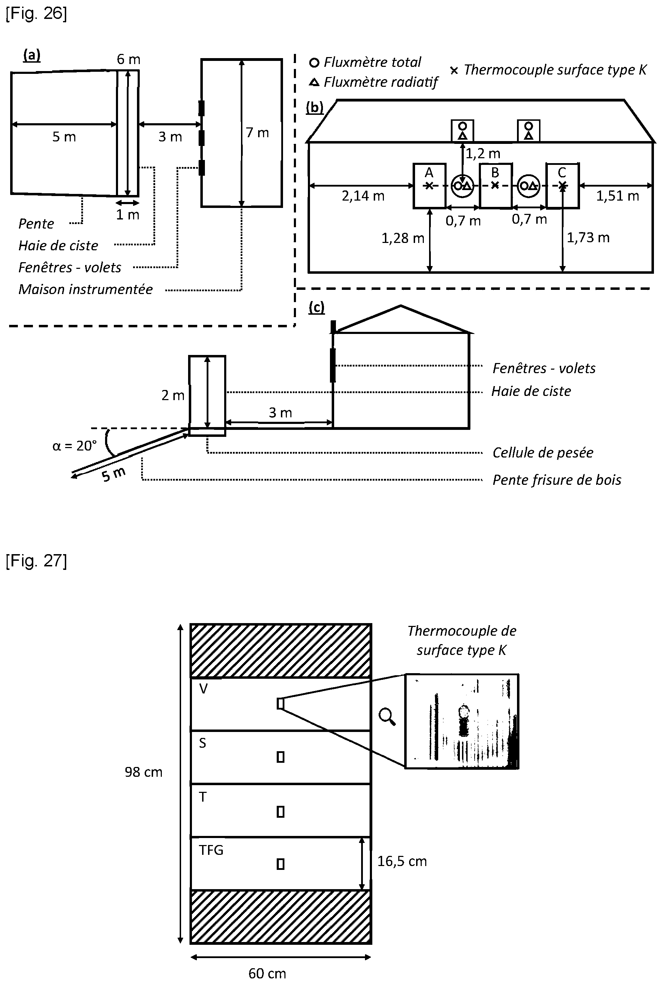

La plateforme est montrée schématiquement sur la [Fig. 26], dont la partie (a) représente la vue du dessus, la partie (b) montre la maison instrumentée vue de face et la partie (c) montre la maison instrumentée vue de côté. Les lettres A, B et C désignent l'emplacement de fenêtres / volets. Une description détaillée et complète de cette plateforme d'essais EXPLORII se trouve dans la publication de V. Tihay-Felicelli et al., « Overview of the platform for experimentation and awareness-raising on fire risks at wildland urban interfaces (EXPLORII platform) », parue dans International Journal of Disaster Risk Reduction, vol. 96, oct. 2023, doi : 10.1016/j.ijdrr.2023.103980.

La plateforme comprend une pente de 5 × 6 m² (L × l) avec une inclinaison de 20 ° au sommet de laquelle se trouve une parcelle plane équipée d'une cellule de pesée (voir la partie (c) de la [Fig. 26]). Plusieurs cages d'un volume de 1 m³ peuvent être disposées sur cette cellule de pesée, puis chargées en végétaux pour former une haie artificielle. Une terrasse de 3 × 6 m² (L x l) sépare la haie d'une construction en maçonnerie courante dont la façade comprend trois fenêtres pouvant être équipées de volets sur la face exposée au feu. La [Fig. 27] montre de manière schématique l'agencement des peintures sur un volet en bois.

Plusieurs fluxmètres radiatifs et totaux (Medtherm, USA et Captec, France) ainsi que des thermocouples de type K (Mesurex, France et TC S.A., France) sont placés en différents points de la façade. Les essais sont filmés par trois caméras : une en vue latérale, une en vue de trois-quarts (côté gauche en regardant la maison) et une en vue aérienne depuis l'arrière de la pente. La plateforme est, de plus, équipée d'un anémomètre 3D et de plusieurs anémomètres 2D à ultrasons permettant de mesurer la vitesse et la direction du vent.

### b) Essais

Une composition intumescente intégrant l'extrait de liège obtenu à l'aide de la technique d'extraction selon un mode de réalisation avantageux de la présente invention (100 bars ; 80 °C ; 20 min) (référencée ci-dessous « Peinture Liège ») a été testée sur cette plateforme d'essais, et elle a été comparée à d'autres peintures selon l'état de la technique, qui seront présentées ci-dessous.

Une zone non peinte dénommée « Bois vierge » a permis de mesurer la température de surface du bois non protégé.

Dans une première série d'essais, on a comparé cette composition selon l'invention à une peinture commerciale Teknosafe FlameGuard 2467-10 (Teknos, Finland), référencée « TFG », testée dans des conditions rigoureusement identiques.

Le protocole comprenait l'allumage de frisure de bois en bas de la pente à l'aide d'une torche (à t= 0 s), la propagation du feu jusqu'à la haie (la vitesse de cette propagation dépend du vent), l'inflammation de la haie et le début de la sollicitation thermique de la façade (à environ t = 10 s), la propagation rapide du feu dans la haie avec un pic de puissance reçue par la façade (à environ t = 20 s), l'inflammation ou non des matériaux disposés en façade, dépendante de la sollicitation thermique et du contact de la flamme avec les éléments, la consommation rapide du combustible et la diminution rapide de la sollicitation thermique (à environ t = 30 s), puis l'extinction possible des éléments enflammés entre cette phase de décroissance et l'extinction de la haie, et enfin la combustion des dernières particules et extinction progressive de la haie, aussi appelée quasi-extinction (à environ t = 60 s).

La [Fig. 28] reproduit des photographies d'un essai à pleine échelle exécuté sur la plateforme EXPLORII décrite ci-dessus.

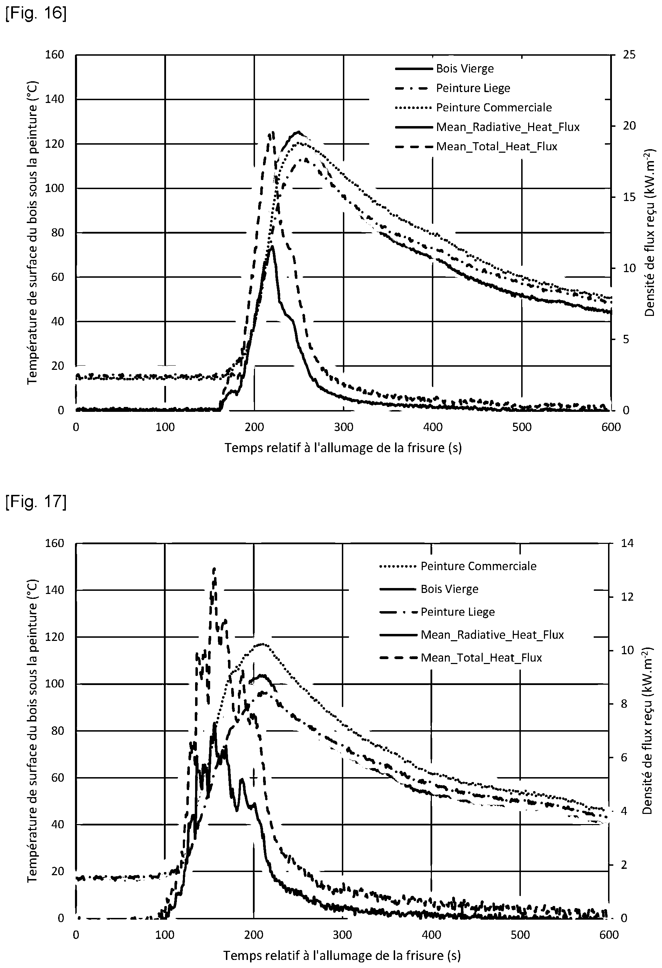

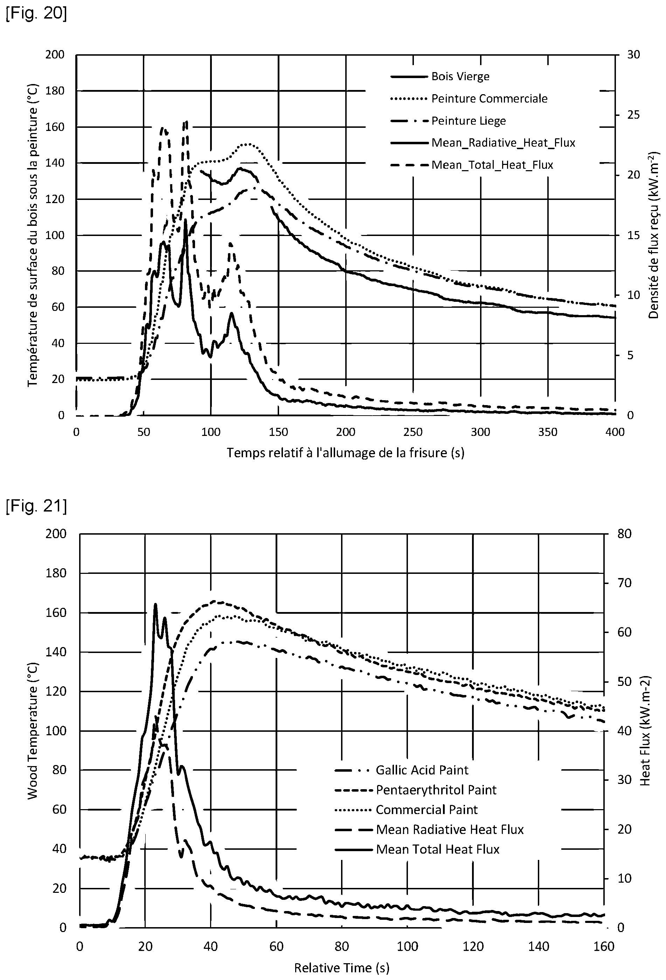

Les [Fig. 16] à [Fig. 20] présentent les résultats expérimentaux de cinq essais menés pour la composition à l'éxtrait de liège selon l'invention. Les courbes appelées « Mean_Radiative_Heat_Flux » et « Mean_Total_Heat_Flux » représentent, respectivement, les densités de flux radiatifs et totaux. Ces valeurs donnent une indication sur la puissance dégagée par le feu lors de l'essai et peuvent varier considérablement selon les conditions météorologiques lors de l'expérimentation. Ce biais est inhérent à la plateforme analytique. Plus précisément, les courbes nommées « Bois Vierge », « Peinture Liege » et « Peinture Commerciale » représentent la température du bois sous la couche de peinture, mesurée à l'aide d'un capteur de température apposé préalablement à l'application de la peinture. Ce capteur, positionné comme montré en [Fig. 27], permet de suivre l'évolution de la température au cours d'un essai d'exposition au feu ou à la chaleur. Ce paramètre permet de montrer le pouvoir d'isolation de la couche de peinture intumescente (pendant le gonflement) au cours du temps de l'essai. Concernant cet essai, ce dernier est réalisé dans des conditions d'échelle 1 sur une plateforme dédiée (figure 1) avec l'agression d'un feu de végétation reproduit à l'aide d'un lit de frisure de bois allumé en partie basse par un expérimentateur, puis assurant la propagation jusqu'à une haie végétale qui va permettre la sollicitation thermique maximale de la peinture. Le t0 de nos essais est calé sur le temps d'allumage de la frisure de bois, ce qui explique pourquoi le temps auquel est observé le maximum de sollicitation se situe entre 20 secondes et 1 min. Ce temps comprend la phase de propagation dans la frisure de bois et la combustion de la haie végétale.

Dans les cinq scenarii explorés et présentés en [Fig. 16] à [Fig. 20], d'intensité plus ou moins forte, la peinture selon l'invention, nommée « Peinture Liege » montre systématiquement des qualités de protection du bois supérieures à la peinture commerciale. Deux paramètres clés peuvent être évoqués : la température maximale atteinte sous la peinture (en surface du bois), toujours inférieure ; et la vitesse d'augmentation de la température, similaire ou plus faible en fonction des scenarii.

Ces essais montrent l'intérêt de l'utilisation de composition à l'extrait de liège selon l'invention dans les conditions de feux de forte intensité et à cinétique rapide (type feux de forêt, maquis).

Dans une deuxième série d'essais, sont comparées, en plus de la peinture commerciale décrite ci-dessus, deux peintures formulées en laboratoire à partir de molécules source de carbone susceptibles d'être approvisionnées en tant que produit biosourcé, à savoir :
- Une peinture intégrant l'acide gallique (acide phénolique) comme source de carbone dans la formulation ternaire (référencée ci-dessous « Gallic Acid Paint ») ;
- Une peinture intégrant le pentaérythritol comme source de carbone (référencée ci-dessous : « Pentaerythritol Paint ».

Ces deux peintures comportaient, en plus des sources de carbone indiquées, de la mélamine comme agent gonflant et du AP 422 comme source d'acide.

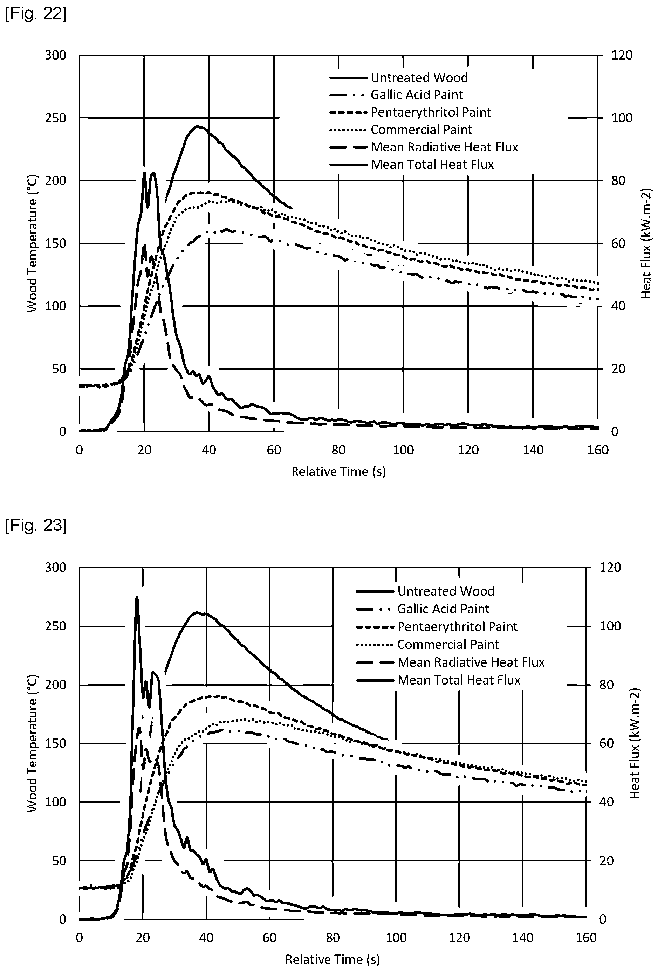

Les résultats sont rassemblés sur les [Fig. 21] à [Fig. 23].

La peinture à l'acide gallique montre une efficacité marquée pour la protection du bois sur ces mêmes scenarii d'exposition au feu, avec une dynamique similaire à celle observée pour les peintures au liège dans la première série d'essais.

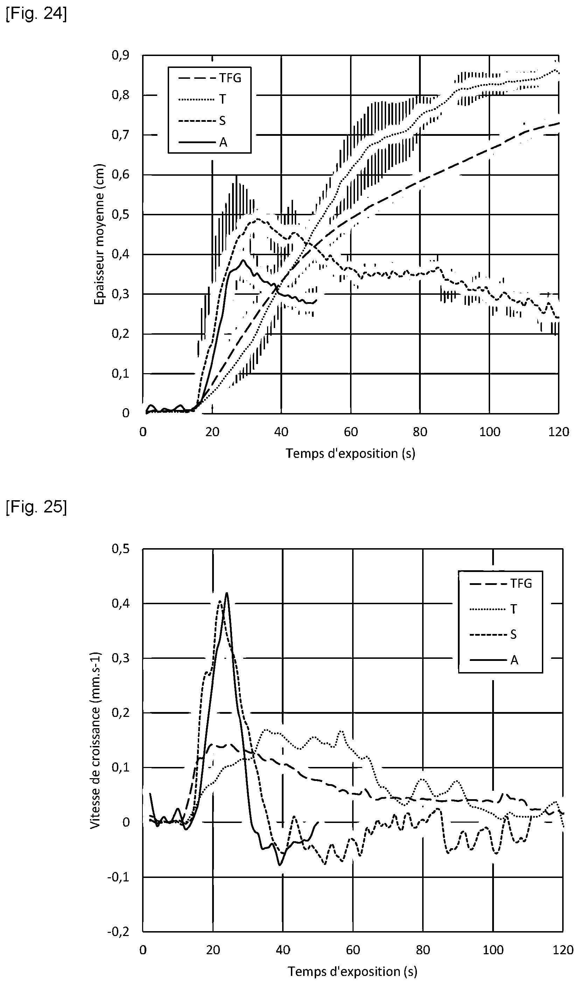

Les [Fig. 24] et [Fig. 25] comparent la cinétique d'expansion de différentes peintures intumescentes : [Fig. 24] montre l'épaisseur moyenne des couches intumescentes, [Fig. 25] leur vitesse de croissance. Les peintures à base de phénol décrites ci-dessus (référencées S pour la peinture à l'acide gallique et A pour la peinture au liège selon l'invention) montrent une cinétique d'expansion singulière avec une vitesse plus rapide que les systèmes commerciaux et le témoin (T et TFG) dans les premières secondes d'exposition, suivie d'une phase de décroissance pouvant survenir rapidement (30 à 40 secondes d'exposition).

Cette cinétique n'est pas optimale dans les scenarii de feu d'intensité moyenne et d'exposition longue, mais peut être cruciale pour augmenter la performance dans un scenario de feu de forte intensité et à cinétique rapide de type feu de forêt.

## Revendications

1. Procédé d'extraction d'une fraction de composés phénoliques à partir du liège, comprenant une étape de mise en contact d'une phase solide qui est formée par un granulat et/ou d'une poudre de liège, avec une phase liquide sous pression dans une enceinte, ladite phase liquide comportant au moins 80 % massiques d'eau et au plus 20 % massiques d'éthanol, et est de préférence composée uniquement d'eau, ledit procédé étant **caractérisé en ce que** la température de l'eau est comprise entre environ 70 °C et environ 100 °C, et de préférence entre environ 70 °C et environ 90 °C, et **en ce que** la pression est d'au moins 30 bars et reste de préférence constante au cours du procédé.

2. Procédé selon la revendication 1, **caractérisé en ce que** la pression est comprise entre environ 30 bars et environ 200 bars, de préférence entre environ 50 bars et environ 150 bars, et plus préférentiellement entre environ 50 bars et environ 140 bars, et encore plus préférentiellement entre environ 60 bars et environ 140 bars.

3. Procédé selon la revendication 1 ou 2, **caractérisé en ce que** la durée du contact à ladite température et à ladite pression est comprise entre environ 10 minutes et environ 120 minutes, et de préférence entre environ 15 minutes et environ 60 minutes.

4. Procédé selon l'une quelconque des revendications 1 à 3, **caractérisé en ce que** la température est comprise entre environ 70 °C et environ 90 °C et la pression est comprise entre environ 60 bars et environ 140 bars.

5. Procédé selon la revendication 4, **caractérisé en ce que** la durée du contact est comprise entre environ 20 minutes et environ 40 minutes.

6. Procédé selon l'une quelconque des revendications 1 à 5, **caractérisé en ce que** ladite phase liquide est de l'eau.

7. Procédé selon l'une quelconque des revendications 1 à 6, **caractérisé en ce que** la taille moyenne des particules dudit granulat ou de ladite poudre se situe entre environ 0,1 mm et environ 5 mm, de préférence entre environ 0,2 mm et environ 3 mm, et encore plus préférentiellement entre environ 0,2 mm et environ 2 mm.

8. Procédé selon l'une quelconque des revendications 1 à 7, **caractérisé en ce que** ledit liège est du liège vierge, et provient de préférence de l'arbre Quercus suber L.

9. Procédé selon l'une quelconque des revendications 1 à 8, **caractérisé en ce qu'**en fin du procédé on sépare ladite phase solide de ladite phase liquide et on récupère ladite phase liquide.

10. Procédé selon la revendication 9, dans lequel ladite phase solide est soumise une deuxième fois à ladite étape de mise en contact avec ladite phase liquide.

11. Utilisation de ladite fraction de composés phénoliques obtenue par le procédé selon l'une quelconque des revendications 1 à 10, à l'état liquide ou solide, dans la fabrication de compositions intumescentes, et notamment de peintures intumescentes à base d'eau, lesdites compositions intumescentes étant destinées à l'utilisation dans l'ignifugation du bois et d'autres matières cellulosiques, des métaux et des matières plastiques.

12. Composition intumescente, notamment peinture intumescente à base d'eau, destinée à l'utilisation dans l'ignifugation du bois et d'autres matières cellulosiques, des métaux et des matières plastiques, **caractérisée en ce qu'**elle comprend ladite fraction de composés phénoliques, à l'état liquide ou solide, obtenue par le procédé selon l'une quelconque des revendications 1 à 10.

13. Composition intumescente selon la revendication 12, **caractérisée en ce qu'**elle comprend par ailleurs au moins un agent gonflant, de préférence la mélamine, et au moins une source d'acide, de préférence un polyphosphate d'ammonium.

14. Composition intumescente selon la revendication 12 ou 13, **caractérisée en ce qu'**elle est à base d'eau.
